# EUROPEAN PATENT APPLICATION

(11) **EP 4 567 571 A1**
(43) Date of publication of application: **11.06.2025**
(21) Application number: 23868495.5
(22) Date of filing: 14.09.2023
(51) Int. Cl.: G06F 3/04845, G06F 3/04817, G06F 3/0482, G06F 3/04883, G06F 3/041, G06F 3/0486, G06F 3/04842

(54) **ELECTRONIC DEVICE FOR CHANGING APPLICATION SCREEN LAYOUT AND/OR DISPLAY ON WHICH SCREEN IS TO BE DISPLAYED, AND METHOD THEREFOR**

(30) Priority: 23.09.2022 KR 20220121216
(71) Applicant: Samsung Electronics Co., Ltd., Suwon-si, Gyeonggi-do 16677 (KR)
(72) Inventor: PARK, Junu, Suwon-si Gyeonggi-do 16677 (KR); KWON, Jinhee, Suwon-si Gyeonggi-do 16677 (KR); KIM, Jeonghyo, Suwon-si Gyeonggi-do 16677 (KR); KIM, Hyunjung, Suwon-si Gyeonggi-do 16677 (KR); PARK, Hyungkun, Suwon-si Gyeonggi-do 16677 (KR); LEE, Sookkyung, Suwon-si Gyeonggi-do 16677 (KR); LIM, Eunhae, Suwon-si Gyeonggi-do 16677 (KR)
(74) Representative: HGF
(86) International application number: PCT/KR2023/013827
(87) International publication number: WO 2024/063441

(57) **Abstract**

An electronic device according to one embodiment can display, on a display, a first screen of an application and a visual object for moving the first screen. The electronic device can: display a first list of one or more external electronic devices on the basis that the visual object dragged by means of a first input is moved to an edge area of the display; display a second list of different layouts of the first screen in response to a second input which is received through the first list and which indicates that a first external electronic device is selected; and, in response to a third input for the second list, transmit, to the first external electronic device, information for outputting, through the first external electronic device, a second screen which corresponds to the first screen and which has a layout in the second list selected by means of the third input.

## Description

### [Technical Field]

The present disclosure relates to an electronic device for changing at least one of a layout of a screen of an application or a display on which the screen is to be displayed, and a method therefor.

### [Background Art]

An electronic device having a deformable form factor using a flexible display is being developed. For example, the electronic device including a plurality of foldable housings may provide a user experience based on a shape of the electronic device to a user using the flexible display positioned across the plurality of housings. For example, based on a shape of the flexible display that is folded or unfolded by an external force of the user, the electronic device may change content displayed on the flexible display. For another example, an electronic device that winds or unfolds a flexible display is being developed.

### [Disclosure]

### [Technical Solution]

An electronic device according to an embodiment may comprise memory storing instructions, communication circuitry, a display, and a processor. The instructions may be configured to, when executed by the processor, cause the electronic device to display a first screen of an application, and a visual object for moving the first screen, in the display. The instructions may be configured to, when executed by the processor, cause the electronic device to display the first screen moved in the display based on a first input dragging the visual object. The instructions may be configured to, when executed by the processor, cause the electronic device to display, based on the visual object dragged by the first input being moved into an edge area of the display, a first list with respect to one or more external electronic devices identified by the communication circuitry. The instructions may be configured to, when executed by the processor, cause the electronic device to display, in response to a second input that is received through the first list, and is indicating selection of a first external electronic device, a second list with respect to distinct layouts of the first screen that is displayable through the first external electronic device. The instructions may be configured to, when executed by the processor, cause the electronic device to transmit, to the first external electronic device in response to a third input with respect to the second list, information for outputting a second screen having a layout in the second list selected by the third input and corresponding to the first screen, through the first external electronic device.

A method of an electronic device may comprise displaying a first screen of an application, and a visual object for moving the first screen, in a display of the electronic device. The method may comprise displaying the first screen moved in the display based on a first input dragging the visual object. The method may comprise displaying, based on the visual object dragged by the first input being moved into an edge area of the display, a first list with respect to one or more external electronic devices identified by communication circuitry of the electronic device. The method may comprise displaying, in response to a second input that is received through the first list, and is indicating selection of a first external electronic device, a second list with respect to distinct layouts of the first screen that is displayable through the first external electronic device. The method may comprise transmitting, to the first external electronic device in response to a third input with respect to the second list, information for outputting a second screen having a layout in the second list selected by the third input and corresponding to the first screen, through the first external electronic device.

An electronic device according to an embodiment may comprise memory storing instructions, communication circuitry, a display, and a processor. The instructions may be configured to, when executed by the processor, cause the electronic device to display a first screen of an application and a first visual object for moving the first screen in the display. The instructions may be configured to, when executed by the processor, cause the electronic device to display, based on a first input dragging the first visual object, the first screen moved in the display. The instructions may be configured to, when executed by the processor, cause the electronic device to display, based on the first visual object dragged by the first input being moved into a first preset area including a first edge of the display, a second visual object for receiving a second input indicating a move of the first screen to another screen of an external electronic device. The instructions may be configured to, when executed by the processor, cause the electronic device to display, based on the first visual object dragged by the first input being moved into a second preset area including a second edge of the display different from the first edge, a third visual object for changing a layout of the first screen displayed in the display.

A method of an electronic device according to an embodiment may comprise displaying a first screen of an application and a first visual object for moving the first screen in a display of the electronic device. The method may comprise displaying, based on a first input dragging the first visual object, the first screen moved in the display. The method may comprise displaying, based on the first visual object dragged by the first input being moved into a first preset area including a first edge of the display, a second visual object for receiving a second input indicating a move of the first screen to another screen of an external electronic device. The method may comprise displaying, based on the first visual object dragged by the first input being moved into a second preset area including a second edge of the display different from the first edge, a third visual object for changing a layout of the first screen displayed in the display.

### [Description of the Drawings]

FIG. 1 illustrates an example of an operation in which an electronic device according to an embodiment communicates with external electronic devices.
FIG. 2 is a block diagram of an electronic device according to an embodiment.
FIG. 3 illustrates an exemplary external appearance of an electronic device including a deformable housing.
FIG. 4 illustrates an example of an operation in which an electronic device according to an embodiment displays a screen of an application in a display.
FIGS. 5A to 5B illustrate an example of an operation in which an electronic device according to an embodiment performs based on an input dragging a screen of an application.
FIGS. 6A, 6B, and 6C illustrate an example of an operation in which an electronic device according to an embodiment performs based on an input dragging a screen of an application.
FIGS. 7A, 7B, 7C, and 7D illustrate an example of an operation in which an electronic device according to an embodiment transmits a screen of an application executed by the electronic device to an external electronic device connected to the electronic device.
FIG. 8 illustrates an example of an operation in which an electronic device according to an embodiment performs based on a screen, which is displayed through an external electronic device and corresponds to an application executed by the electronic device.
FIG. 9 illustrates an example of an operation in which an electronic device according to an embodiment displays a screen of an application executed by the electronic device using external electronic devices.
FIG. 10 illustrates an example of a flowchart for describing an operation of an electronic device according to an embodiment.
FIG. 11 illustrates an example of a flowchart for describing an operation of an electronic device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

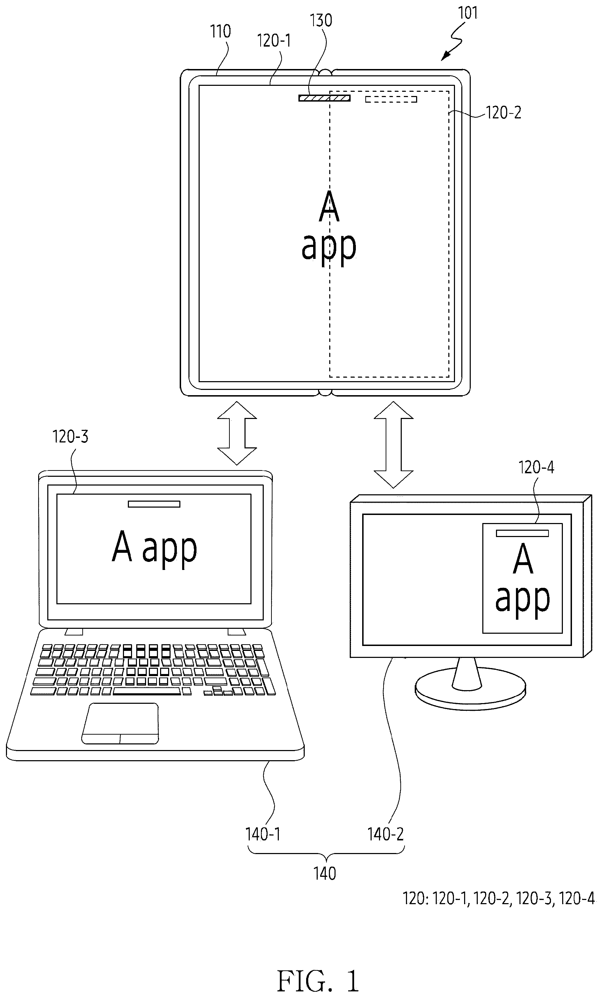

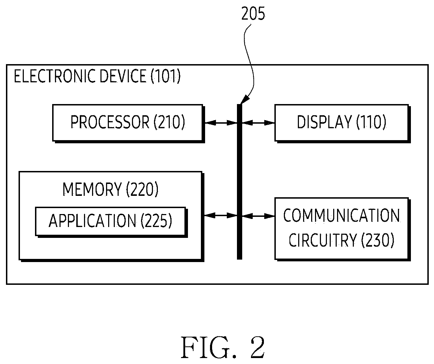

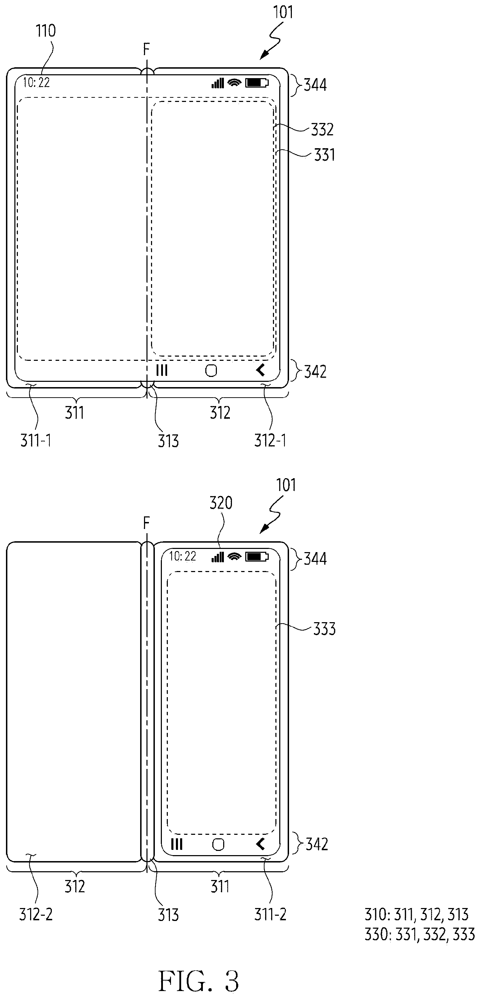

FIG. 1 illustrates an example of an operation in which an electronic device 101 according to an embodiment communicates with external electronic devices 140-1 and 140-2. The electronic device 101 of FIG. 1 may be a terminal. The terminal may include, for example, a personal computer (PC) such as a laptop and a desktop, a smartphone, a smartpad, and/or a tablet PC. An embodiment is not limited to the example, and the terminal may include a smart accessory such as a smartwatch and/or a head-mounted device (HMD). One or more hardware included in the electronic device 101 according to an embodiment will be described with reference to FIG. 2. An example of an external appearance of the electronic device 101 according to an embodiment will be described with reference to FIG. 3.

The electronic device 101 according to an embodiment may include a display 110. The electronic device 101 may display a screen 120 associated with an application executed by the electronic device 101 in the display 110. The electronic device 101 may display the screen 120 having an adjustable size in the display 110. For example, the electronic device 101 may change the size of the screen 120, based on a touch input received through the display 110. The electronic device 101 may display the screen 120 associated with the application executed by the electronic device 101, through another display different from the display 110 included in the electronic device 101.

The electronic device 101 may communicate with an external electronic device 140. The electronic device 101 and the external electronic device 140 may be connected to each other, based on a short-range communication protocol, such as Bluetooth, Wi-Fi Direct, Wi-Fi, and/or near field communication (NFC). Referring to FIG. 1, an exemplary case in which the electronic device 101 is connected to the exemplary external electronic devices 140-1 and 140-2 is illustrated. For example, the electronic device 101 may be connected to the external electronic device 140-1 having a form factor of a laptop through a wireless network. For example, the electronic device 101 may be connected to the external electronic device 140-2 corresponding to a monitor, through a wired interface (e.g., universal serial bus (USB), and/or a high-definition multimedia interface (HDMI)). The electronic device 101 may transmit information for displaying the screen 120 of the application executed by the electronic device 101 though the external electronic device 140, to the external electronic device 140. The information may include an image and/or a video for displaying the screen 120 in a display of the external electronic device 140. The information may include audio for being outputted from the external electronic device 140, by being synchronized with the screen 120. Referring to FIG. 1, cases in which the electronic device 101 displays the screen 120 of the application executed by the electronic device 101, through the display of the external electronic device 140 as well as the display 110 included in the electronic device 101 are illustrated.

Referring to FIG. 1, screens 120-1, 120-2, 120-3, and 120-4 in distinct states in which the electronic device 101 displays in distinct displays (e.g., the display 110, and displays of the external electronic devices 140-1, and 140-2), based on execution of a specific application (e.g., an application A) are illustrated. According to an embodiment, the electronic device 101 may change a layout of the screen 120 displayed in the display 110, based on an input received through the display 110. The layout of the screen 120 may be distinguished by an arrangement of one or more visual objects displayed in the screen 120. In the display 110, screens 120-1 and 120-2 having distinct sizes may have distinct layouts suitable for a size of each of the screens 120-1 and 120-2.

The layouts of the screens 120-1 and 120-2 may be changed based on execution of an application corresponding to the screens 120-1 and 120-2. For example, the electronic device 101 may obtain information on the screen 120-1 to be displayed in the display 110, by executing the application based on a size of the screen 120-1. The electronic device 101 may display the screen 120-1 in the display 110 by controlling the display 110 based on the information. The screen 120-1 may have a layout suitable for a size of a display area of the display 110. Similarly, the electronic device 101 may display the screen 120-2 in the display 110, by executing the application based on a size of the screen 120-2. The screen 120-2 may have a layout suitable for a size of a portion (e.g., a portion having a height longer than a width) in which the screen 120-2 is displayed in the display 110.

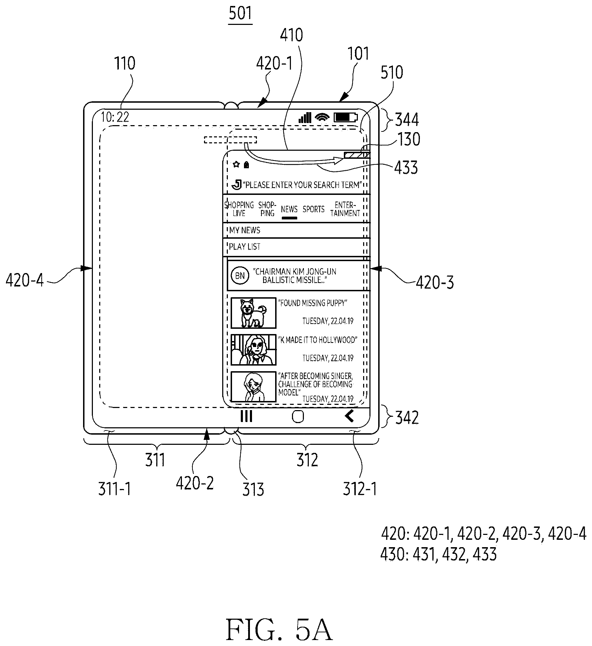

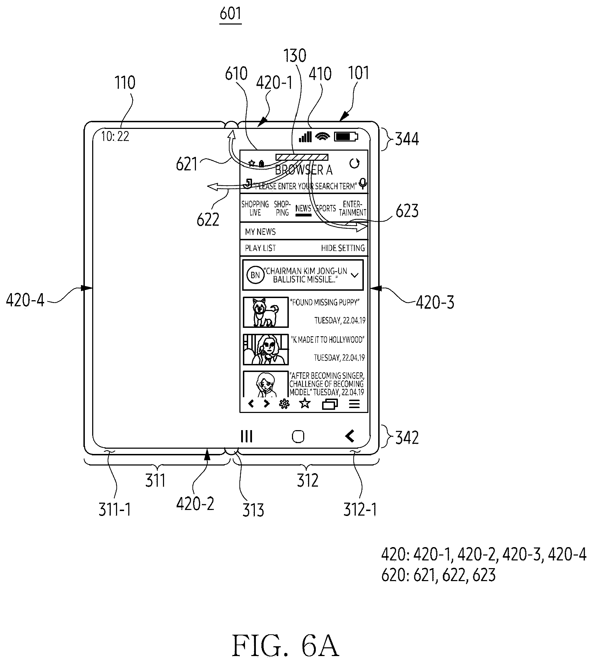

In a state in which the screen 120 is displayed in the display 110 based on the execution of the application, the electronic device 101 may receive an input for changing the layout of the screen 120. Referring to FIG. 1, the electronic device 101 may display a visual object 130 for receiving the input together with the screen 120-1. The visual object 130 may have a shape of a handle positioned at an edge (e.g., an upper end of the screen 120-1) of the screen 120-1. An embodiment is not limited thereto, and the visual object 130 may have a shape of a title bar and/or an icon. The electronic device 101 may selectively display any one of the screens 120-1 and 120-2 in the display 110, based on the input. An operation in which the electronic device 101 according to an embodiment receives an input for switching the layout of the screen 120 displayed in the display 110 will be described with reference to FIGS. 5A to 5B and/or FIGS. 6A to 6B.

The electronic device 101 according to an embodiment may receive an input indicating selection of any one display on which the screen 120 is to be displayed among the display 110 of the electronic device 101, and the display of the external electronic device 140 connected to the electronic device 101. Referring to FIG. 1, the electronic device 101 may receive the input through the visual object 130 displayed in superimposition on the screen 120-1. For example, based on the input associated with the visual object 130 displayed in superimposition on the screen 120-1, the electronic device 101 may receive an input for changing the layout of the screen 120-1 or/or selecting a display to which the screen 120-1 is to be moved. Based on the input associated with the visual object 130, the electronic device 101 may adjust the layout of the display to which the screen 120-1 is to be moved and the screen 120-1 to be displayed in the display. For example, the screen 120-3 may be displayed, based on transmitting information to display the screen 120-3 with a first layout by the electronic device 101 identifying the input, to the external electronic device 140-1. For example, the screen 120-4 may be displayed, based on transmitting information to display the screen 120-4 with a second layout by the electronic device 101 identifying the input, to the external electronic device 140-2. The first layout may correspond to the layout of the screen 120-1, and the second layout may correspond to the layout of the screen 120-2.

As described above, the electronic device 101 according to an embodiment may display the screen 120 of the application in the display 110 based on a size adjustable by a user. As the size of the screen 120 changes, the electronic device 101 may adaptively change a layout of a plurality of visual objects included in the screen 120. The electronic device 101 may display the screen 120 having the adaptively changed layout through another display (e.g., the display of the external electronic device 140) different from the display 110. The electronic device 101 may receive an input for changing a display on which the screen 120 is to be displayed and a layout of the screen 120 to be displayed in the display, through a handle for changing a position of the screen 120 in a specific display such as the visual object 130. Based on the visual object 130, the electronic device 101 may improve a user experience associated with a move of the screen 120.

Hereinafter, referring to FIG. 2, one or more hardware included in the electronic device 101 according to an embodiment will be described.

FIG. 2 is a block diagram of an electronic device 101 according to an embodiment. The electronic device 101 of FIG. 2 may include the electronic device 101 of FIG. 1. The electronic device 101 may include at least one of a processor 210, memory 220, a display 110, and communication circuitry 230. The processor 210, the memory 220, the display 110, and the communication circuitry 230 may be electronically and/or operably coupled with each other by an electronical component such as a communication bus 205. Hereinafter, distinct hardware (or circuitry) distinguished by a block being operably coupled may mean that a direct connection or an indirect connection between the hardware is established by wire or wirelessly, so that second hardware is controlled by first hardware among the hardware. Although illustrated based on distinct blocks, an embodiment is not limited thereto, and a plurality of hardware (e.g., combinations of the processor 210, the memory 220, and the communication circuitry 230) may be included in a single integrated circuit such as a system on a chip (SoC). A type and/or the number of hardware components included in the electronic device 101 is not limited as illustrated in FIG. 2. An exemplary shape of the electronic device 101 including one or more hardware described with reference to FIG. 2 will be described with reference to FIG. 3.

The processor 210 of the electronic device 101 according to an embodiment may include hardware and/or circuitry for processing data based on one or more instructions. For example, the hardware and/or the circuitry for processing data may include an arithmetic and logic unit (ALU), a floating point unit (FPU), a field programmable gate array (FPGA), a central processing unit (CPU), and/or an application processor (AP). The number of the processors 210 may be one or more. For example, the processor 210 may have a structure of a multi-core processor such as a dual core, a quad core, or a hexa core.

The memory 220 of the electronic device 101 according to an embodiment may include a hardware component for storing data and/or instructions inputted and/or outputted to the processor 210. The memory 220 may include, for example, volatile memory such as random-access memory (RAM), and/or non-volatile memory such as read-only memory (ROM). The volatile memory may include, for example, at least one of dynamic RAM (DRAM), static RAM (SRAM), cache RAM, and pseudo SRAM (PSRAM). The nonvolatile memory may include, for example, at least one of programmable ROM (PROM), erasable PROM (EPROM), electrically erasable PROM (EEPROM), flash memory, a hard disk, a compact disk, a solid state drive (SSD), and an embedded multimedia card (eMMC).

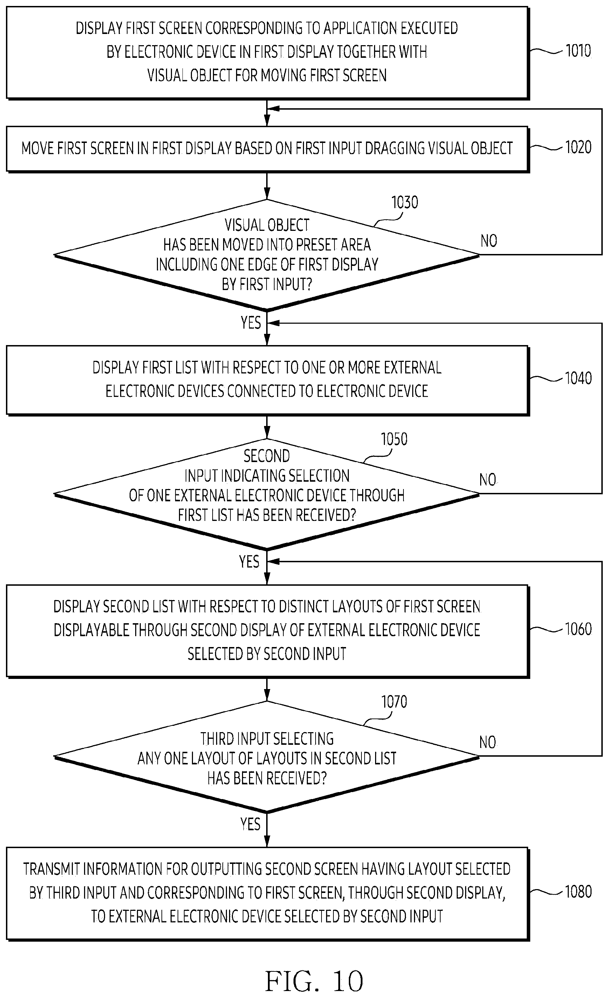

In the memory 220, one or more instructions (or commands) indicating a calculation and/or an operation to be performed by the processor 210 on data may be stored. A set of one or more instructions may be referred to as firmware, an operating system, a process, a routine, a subroutine and/or an application 225. For example, the electronic device 101 and/or the processor 210 may perform at least one of operations of FIGS. 10 to 11 when a set of a plurality of instructions distributed in a form of the operating system, the firmware, a driver, and/or the application 225 is executed. Hereinafter, the application 225 being installed in the electronic device 101 may mean that one or more instructions provided in the form of the application 225 are stored in the memory 220 of the electronic device 101, and that the one or more applications are stored in an executable format (e.g., a file with an extension specified by the operating system of the electronic device 101). In an example in which a plurality of applications are installed in the electronic device 101, the processor 210 of the electronic device 101 may substantially simultaneously execute the plurality of applications including the application 225 based on multitasking.

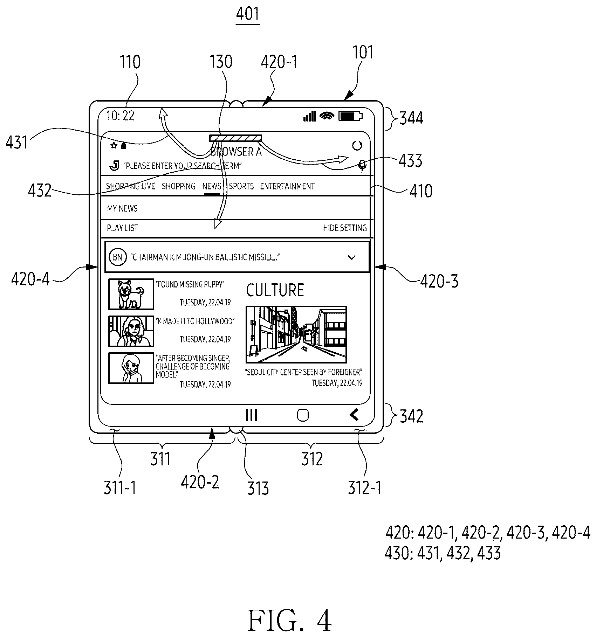

The display 110 of the electronic device 101 according to an embodiment may output visualized information (e.g., at least one of screens of FIGS. 4 to 8) to a user. For example, the display 110 may output the visualized information to the user, by being controlled by the processor 210. The display 110 may include a flat panel display (FPD) and/or an electronic paper. The FPD may include a liquid crystal display (LCD), a plasma display panel (PDP), and/or one or more light emitting diodes (LED). The LED may include an organic LED (OLED).

The display 110 of the electronic device 101 according to an embodiment may include a sensor (e.g., a touch sensor panel (TSP)) for detecting an external object (e.g., a finger of the user) on the display 110. For example, based on the TSP, the electronic device 101 may detect an external object contacting the display 110 or floating on the display 110. In response to detecting the external object, the electronic device 101 may execute a function associated with a specific visual object corresponding to a position of the external object on the display 110 among visual objects being displayed in the display 110.

The communication circuitry 230 of the electronic device 101 according to an embodiment may include a hardware component for supporting transmission and/or reception of an electrical signal between the electronic device 101 and an external electronic device (e.g., the external electronic device 140 of FIG. 1). The communication circuitry 230 may include, for example, at least one of a modem (MODEM), an antenna, and an optic/electronic (O/E) converter. The communication circuitry 230 may support the transmission and/or the reception of the electrical signal, based on various types of protocols such as ethernet, a local area network (LAN), a wide area network (WAN), wireless fidelity (WiFi), WiFi direct, Bluetooth, Bluetooth low energy (BLE), ZigBee, near field communication (NFC), long term evolution (LTE), and 5G new radio (NR).

Although not illustrated, the electronic device 101 according to an embodiment may include an output means for outputting information in a form other than a visualized form. For example, the electronic device 101 may include a speaker for outputting an acoustic signal. For example, the electronic device 101 may include a motor for providing haptic feedback based on vibration.

The processor 210 of the electronic device 101 may obtain information for displaying a screen (e.g., the screen 120 of FIG. 1) in the display 110 based on execution of the application 225. Based on the information, the processor 210 may display the screen by controlling the display 110. The information may include one or more parameters for adjusting an arrangement (e.g., a layout) of a plurality of visual objects included in the screen, based on a size of at least a portion of the display 110. The electronic device 101 may display a visual object (e.g., the visual object 130 of FIG. 1) for adjusting a position and/or a layout of the screen together with the screen in the display 110. The electronic device 101 may display first options for adjusting a layout of the electronic device 101 based on an input associated with the visual object. The electronic device 101 may display second options for selecting a display on which the screen is to be displayed based on another input associated with the visual object. The electronic device 101 may change a layout of a screen to be displayed in a display selected by the second options, based on the first options together with the second options.

The electronic device 101 according to an embodiment may differently adjust a size of a screen displayed based on the application 225 from a size of a display area of the display 110. Hereinafter, an example of an operation in which the electronic device 101 changes the layout of the screen of the application 225 based on distinct areas formed in the display 110, based on an exemplary form factor of FIG. 3 will be described.

FIG. 3 illustrates an exemplary external appearance of an electronic device 101 including a deformable housing 310. The electronic device 101 of FIG. 3 may be an example of the electronic device 101 of FIGS. 1 to 2. For example, the electronic device 101 and the display 110 of FIG. 2 may include the electronic device 101 and a display 110 of FIG. 3.

Referring to FIG. 3, the deformable housing 310 of the electronic device 101 according to an embodiment may have a structure that is foldable by a folding axis F. The housing 310 may include a first sub-housing 311 and a second sub-housing 312. The housing 310 may include a hinge assembly 313 foldably coupled to the first sub-housing 311 and the second sub-housing 312, through each of distinct surfaces. The folding axis F in the housing 310 may be included in the hinge assembly 313.

Referring to FIG. 3, at least a portion of the display 110 of the electronic device 101 may be positioned on a first surface 311-1 of the first sub-housing 311. In an embodiment of FIG. 3 in which a single plane is formed by the first surface 311-1 of the first sub-housing 311 and a first surface 312-1 of the second sub-housing 312, the display 110 may be positioned in both the first surface 311-1 of the first sub-housing 311 and the first surface 312-1 of the second sub-housing 312, across the hinge assembly 313. A surface of the housing 310 formed by the first surface 311-1 of the first sub-housing 311 and the first surface 312-1 of the second sub-housing 312 may be referred to as a front surface. In terms of a display that is foldable by the hinge assembly 313, the display 110 may be referred to as a flexible display.

Referring to FIG. 3, the electronic device 101 may include a display 320 positioned in another portion different from a portion of the housing 310 in which the display 110 is positioned. The display 320 may be positioned on a second surface 311-2 opposite to the first surface 311-1 of the first sub-housing 311 in which the display 110 is positioned. By the second surface 311-2 of the first sub-housing 311 opposite the first surface 311-1, and a second surface 312-2 of the second sub-housing 312, for example, a single plane referred to as a rear surface may be formed. As the display 320 is positioned on the second surface 311-2 of the first sub-housing 311, the display 320 may be positioned in a direction opposite to the display 110.

The electronic device 101 according to an embodiment may include a sensor for identifying a shape of a housing 310 and/or the display 110 that are foldable by the folding axis F. The sensor may include a hall sensor for identifying the shape of the housing 310 and/or the display 110, based on a positional relationship between a magnetic field sensor and a magnet. The sensor may include an inertia measurement unit (IMU) sensor positioned in the first sub-housing 311 and/or the second sub-housing 312 of the electronic device 101. The electronic device 101 may identify an angle of the display 110 bent by the folding axis F, based on data of the sensor.

The electronic device 101 according to an embodiment may change a size and/or a layout of a screen of an application (e.g., the application 225 of FIG. 2) executed by the electronic device 101, based on the shape of the display 110 and at least one display activated among the displays 110 and 320. The size and/or the layout of the screen may be associated with a size of an area 330 of a display on which the screen is to be displayed. For example, as the first sub-housing 311 and the second sub-housing 312 are unfolded based on the hinge assembly 313, the electronic device 101 may activate the display 110 in a state (e.g., an unfolded state) in which the display 110 substantially has a shape of a plane. In the activated display 110, the electronic device 101 may display a menu (e.g., a navigation bar) including one or more visual objects for switching screens displayed in the display 110, through an area 342. In the display 110, the electronic device 101 may display a visual object (e.g., a status bar) including one or more icons indicating a state (e.g., a SOC of a battery, a current time, and/or a type of a network connected to the electronic device 101) of the electronic device 101, through an area 344.

The electronic device 101 according to an embodiment may change the size and/or the layout of the screen to be displayed through the display 110, based on areas 331 and 332 formed in the display 110. For example, the area 331 corresponding to a remaining portion excluding the areas 342 and 344 in a display area of the display 110 may have a maximum size of the screen in which the electronic device 101 may display through the display 110. For example, the area 332 corresponding to a portion of the display 110 distinguished by the folding axis F may be set to display a screen associated with the shape of the display 110 folded by the folding axis F. While displaying the screen using the display 110, the electronic device 101 may change a size and/or a layout of the screen based on at least one of the areas 331 and 332.

For example, as the first sub-housing 311 and the second sub-housing 312 are folded based on the hinge assembly 313, the electronic device 101 may activate the display 320 in a state (e.g., a folded state) in which the display 110 is fully occluded. In the activated display 320, the electronic device 101 may change the size and/or layout of the screen based on an area 333 formed in the display 320. For example, the electronic device 101 including the displays 110 and 320 may change a size and/or a layout of a specific screen of a specific application, based on the areas 331, 332, and 333. For example, in a state in which the specific screen is displayed in the display 110 based on the area 331, the electronic device 101 may activate the display 320 according to the folding of the display 110. In the example, after activating the display 320, the electronic device 101 may change the layout of the specific screen from a first layout based on the area 331 to a second layout based on the area 333 in the display 320. Based on switching from the first layout to the second layout, the electronic device 101 may display a screen with the second layout suitable for the area 333 while including information corresponding to the specific screen, through the display 320.

The electronic device 101 changing the layout of the screen is not limited to the deformation of the housing 310 and/or the display 110 described above. For example, the electronic device 101 may identify an input indicating a change of a position, the size, and/or the layout of the screen from a user watching the screen. Based on the input, the electronic device 101 may change the layout of the screen. Hereinafter, an example of a visual object displayed by the electronic device 101 to receive the input and an operation of the electronic device 101 associated with the input, will be described with reference to FIG. 4.

FIG. 4 illustrates an example of an operation in which an electronic device 101 according to an embodiment displays a screen 410 of an application in a display 110. The electronic device 101 of FIG. 4 may be an example of the electronic device 101 of FIGS. 1 to 3. For example, the electronic device 101 and the display 110 of FIG. 2 may include the electronic device 101 and the display 110 of FIG. 4. Referring to FIG. 4, an exemplary state 401 in which the electronic device 101 executing the application 225 of FIG. 2 displays the screen 410 in the display 110 is illustrated. Hereinafter, a screen including the screen 410 may mean a user interface (UI) displayed within at least a portion of the display 110. The screen may include, for example, activity of an Android operating system.

The electronic device 101 according to an embodiment may display the screen 410 of the application and a visual object 130 for moving the screen 410 in the display 110. In the state 401 of FIG. 4, the electronic device 101 may display the visual object 130 together with the screen 410 having a layout based on the area 331 of FIG. 3. The electronic device 101 may change a position of the screen 410 in the display 110, based on an input associated with the visual object 130. Based on the input associated with the visual object 130, the electronic device 101 may adjust a layout of the screen 410. Based on the input associated with the visual object 130, the electronic device 101 may move the screen 410 to another screen different from the display 110.

For example, the electronic device 101 may display the screen 410 moved in the display 110, based on an input dragging the visual object 130. The input dragging the visual object 130 may be identified based on an external object (e.g., a fingertip) contacted on the display 110. For example, based on identifying that an external object contacted (e.g., a long-press gesture) for a preset period (e.g., 1.5 seconds) on a portion of the display 110 on which the visual object 130 is displayed, the electronic device 101 may move the visual object 130 and the screen 410 based on a position of the external object contacted on the display 110. For example, the electronic device 101 may move the screen 410 based on a path 430 in which the external object is dragged on the display 110.

Referring to FIG. 4, the path 430 in which the visual object 130 is dragged is illustrated. Based on a position of the visual object 130 dragged by the path 430, the electronic device 101 may enter a state for moving the screen 410 corresponding to the visual object 130 to another display different from the display 110. For example, in the state 401, based on the visual object 130 dragged to an edge 420 of the display 110, the electronic device 101 may enter a state for switching the screen 410 between displays and/or changing the layout of the screen 410.

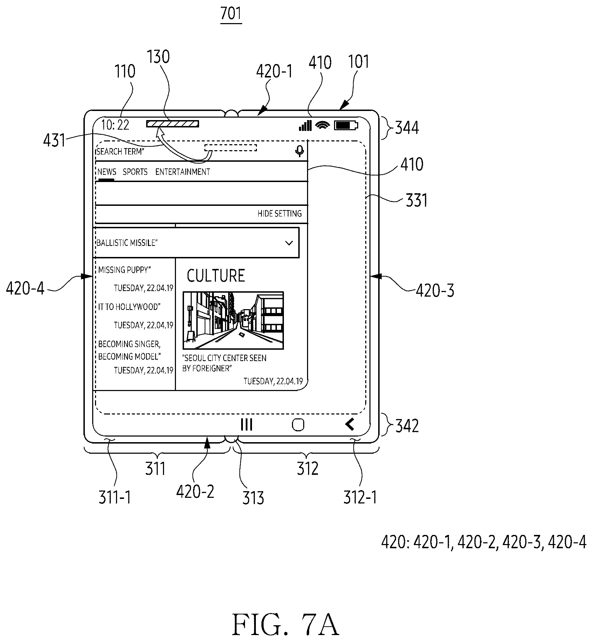

In an embodiment of FIG. 4 in which the display 110 has a rectangular shape, the display 110 may include a first edge 420-1, a second edge 420-2 spaced away in parallel from the first edge 420-1, a third edge 420-3 extending from an end of the first edge 420-1 to an end of the second edge 420-2, and a fourth edge 420-4 extending from another end of the first edge 420-1 to another end of the second edge 420-2. In the state 401 of FIG. 4 in which a navigation bar is displayed along the second edge 420-2, the electronic device 101 may enter another state (e.g., a state 701 of FIG. 7A) for moving the screen 410 corresponding to the visual object 130 to the other display different from the display 110, based on the visual object 130 dragged toward the first edge 420-1 along the first path 431. In the state 401, the electronic device 101 may display the screen 410 moved based on the visual object 130 dragged along the second path 432. After the visual object 130 is dragged along the second path 432, based on a gesture of releasing the visual object 130, the electronic device 101 may move the screen 410, based on a point in the display 110 from which the visual object 130 is released. In the state 401, the electronic device 101 may enter another state (e.g., a state 501 of FIG. 5A) for changing the layout of the screen 410 corresponding to the visual object 130, based on the visual object 130 dragged toward the third edge 420-3 along the third path 433. In the state 401, the electronic device 101 may enter the other state for changing the layout of the screen 410 corresponding to the visual object 130, based on the visual object 130 dragged toward the fourth edge 420-4. An operation of the electronic device 101 based on the first edge 420-1, the third edge 420-3, and the fourth edge 420-4 has been described, but an embodiment is not limited thereto.

Hereinafter, an example of an operation in which the electronic device 101 according to an embodiment performs based on the visual object 130 dragged along the third path 433 will be described with reference to FIGS. 5A to 5B.

FIGS. 5A to 5B illustrate an example of an operation in which an electronic device 101 according to an embodiment performs based on an input dragging a screen 410 of an application. The electronic device 101 of FIGS. 5A to 5B may be an example of the electronic device 101 of FIGS. 1 to 4. For example, the electronic device 101 and the display 110 of FIG. 2 may include the electronic device 101 and a display 110 of FIGS. 5A to 5B. A state 501 of FIG. 5A, which is a state after the state 401 of FIG. 4, may include a state of the electronic device 101 identifying a visual object 130 dragged to a third edge 420-3 along a third path 433.

Referring to the state 501 of FIG. 5A, based on the visual object 130 dragged along the third path 433 being moved to a preset area including the third edge 420-3, the electronic device 101 may display a visual object 510 for changing a layout of the screen 410 displayed in the display 110. For example, the preset area may be a portion less than or equal to a preset distance from the third edge 420-3 in the display 110. Based on an external object dragged on the display 110 along the third path 433 being stopped exceeding a preset period (e.g., 3 seconds) on the preset area, the electronic device 101 may enter the state 501 of FIG. 5A, or display the visual object 510.

A condition for switching to the state 501 of FIG. 5A in which the visual object 510 is displayed is not limited to the example. For example, as the visual object 130 and the screen 410 are dragged along the third path 433, the electronic device 101 may identify a size of the screen 410 divided by the third edge 420-3. For example, as the visual object 130 is moved along the third path 433 to the third edge 420-3, the size of the screen 410, which includes the visual object 130 and is displayed in the display 110, may be reduced. Based on a ratio between a portion of the screen 410 moved outside the third edge 420-3 and another portion of the screen 410 displayed in the display 110, the electronic device 101 may initiate a display of the visual object 510. For example, based on identifying that a portion exceeding half of the screen 410 is moved outside the third edge 420-3, the electronic device 101 may display the visual object 510 in the display 110, by switching to the state 501 of FIG. 5A.

The electronic device 101 according to an embodiment may guide that the layout of the screen 410 is capable of being changed, based on the visual object 510. Based on a size and/or a position of the visual object 510, the electronic device 101 may guide the size and/or a position of the screen 410. The visual object 510 may have a shape of a figure corresponding to the area 332 of FIG. 3. For example, the visual object 510 may have a preset color (e.g., blue), and may have a quadrilateral shape with a preset opacity (or transparency). For example, the visual object 510 may be included in a portion of the display 110 included in a foldable portion (e.g., a second sub-housing 312 in which the third edge 420-3 is positioned) of a housing 310. The electronic device 101 according to an embodiment may change the position and/or the size of the screen 410 to a position and/or a size corresponding to the visual object 510, based on identifying that the visual object 130 dragged along the third path 433 is released within the visual object 510.

The electronic device 101 changing the layout of the screen 410 may depend on whether a change of the layout is supported by execution of an application (e.g., the application 225 of FIG. 2) providing the screen 410. For example, the electronic device 101 may identify whether the layout of the screen 410 is adjustable, based on moving the visual object 130. The electronic device 101 may visualize whether the layout of the screen 410 is adjustable based on a color of a border line of the screen 410. For example, in the case that the layout of the screen 410 is adjustable based on preset layouts, the electronic device 101 may change the color of the border line of the screen 410 to a first preset color (e.g., blue). For example, in the case that the layout of the screen 410 supports a single layout, the electronic device 101 may change the color of the border line of the screen 410 to a second preset color (e.g., yellow) different from the first preset color. The state 501 displaying the visual object 510 of FIG. 5A may be a state in which the electronic device 101 has identified that the layout of the screen 410 may be adjusted to a layout associated with the visual object 510. In the state 501, the color of the border line of the screen 410 may correspond to the first preset color.

Whether the visual object 510 is displayed may be associated with whether the layout of the screen 410 is adjustable, similar to the operation in which the color of the border line is adjusted. For example, in the case that the number of layouts of the screen 410 supported by the application is more than or equal to two, the electronic device 101 may display the visual object 510 for guiding the change of the layout of the screen 410 based on the visual object 130 moving to the third edge 420-3 along the third path 433.

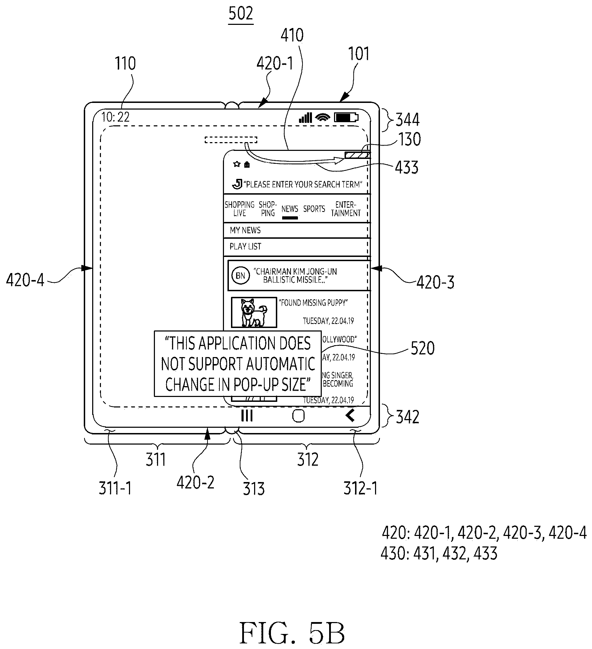

Referring to FIG. 5B, an exemplary state 502 in which the number of layouts of the screen 410 supported by the application is one is illustrated. Based on identifying that it is impossible to change the layout of the screen 410 in the state 502, the electronic device 101 may set the color of the border line of the screen 410 to the second preset color. In the case that the layout of the screen 410 may not be changed, the electronic device 101 may refrain from displaying the visual object 510 guiding a change of the layout of the screen 410 even though the visual object 130 is dragged to the third edge 420-3. Referring to FIG. 5B, the electronic device 101 according to an embodiment may guide that the layout of the screen 410 may not be changed based on a visual object 520 having a form of a pop-up window (e.g., a toast notification) displayed in the display 110. Through the visual object 520, the electronic device 101 may display preset text (e.g., "This application does not support an automatic change in a pop-up size. ") guiding that it is impossible to change the layout of the screen 410.

As described above, the electronic device 101 may display the visual object 510 for changing the size of the screen 410 distinguished by the third edge 420-3, to a size of the preset area (e.g., the preset area 332 of FIG. 3) associated with the third edge 420-3, based on identifying that the screen 410 is moved, based on the visual object 130 dragged by the external object on the display 110, to the third edge 420-3 (or a fourth edge 420-4 parallelly spaced apart from the third edge 420-3). In response to an input (e.g., an input including a gesture of releasing the visual object 130 on the visual object 510) indicating an adjustment of the layout of the screen 410 based on the visual object 510, the electronic device 101 may change the layout of the screen 410 based on the visual object 510.

Hereinafter, an example of an operation of the electronic device 101 associated with the screen 410 having a changed layout based on the visual object 510 and the visual object 130 displayed in the screen 410 will be described with reference to FIGS. 6A to 6B.

FIGS. 6A to 6C illustrate an example of an operation in which an electronic device 101 according to an embodiment performs based on an input dragging a screen 610 of an application. The electronic device 101 of FIGS. 6A to 6C may be an example of the electronic device 101 of FIGS. 1 to 4. For example, the electronic device 101 and the display 110 of FIG. 2 may include the electronic device 101 and a display 110 of FIGS. 6A to 6C. A state 601 of FIG. 6A, which is a state after the state 501 of FIG. 5A, may include a state of the electronic device 101 identifying an input indicating selection of a visual object 510. In the state 601 of FIG. 6A, the electronic device 101 may display a screen 610 based on a size (e.g., width, height, extent, and/or aspect ratio) of a portion of the display 110 distinguished by a folding axis. An exemplary state 601 of the electronic device 101 displaying the screen 610 occupying a right half of the display 110 distinguished by the folding axis is illustrated, but an embodiment is not limited thereto.

Referring to FIG. 6A, in response to the input, the electronic device 101 may display a screen 610 corresponding to the screen 410 by changing the layout of the screen 410 of FIG. 5A. Referring to the screen 610 of FIG. 6A and the screen 410 of FIG. 5A, based on switching of a layout, a position, a size, and/or an arrangement of a plurality of visual objects (e.g., a back button, a forward button, a home button, and/or uniform resource locators (URL) text) included in the screen 410 may be changed. Based on the switching of the layout, a size of a screen (e.g., activity) on which the plurality of visual objects are displayed may be changed. Referring to FIG. 6A, according to an embodiment, the electronic device 101 may display a visual object 130 superimposed on the screen 610.

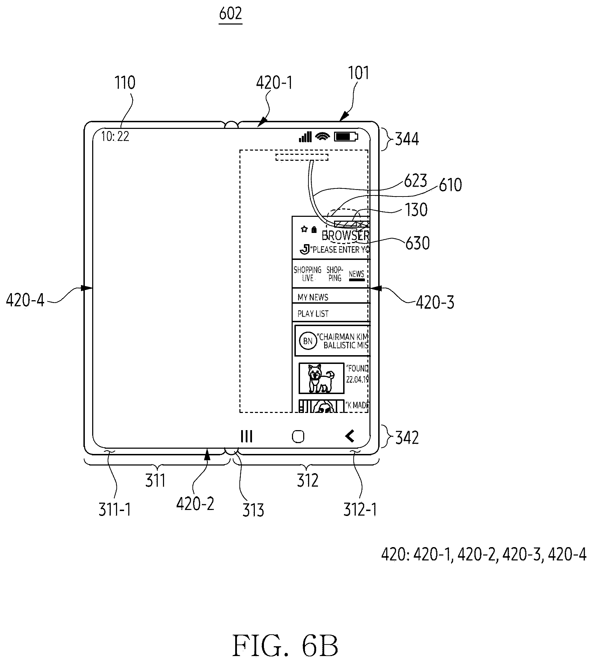

As described above with reference to FIG. 4, the electronic device 101 may identify an input indicating a move of the screen 610 in the display 110 based on the visual object 130. For example, the electronic device 101 may display the screen 610 moved in the display 110, based on the input dragging the visual object 130 along a path 620. For example, along the second path 622, based on the visual object 130 dragged inside the display 110 spaced apart from an edge 420, the electronic device 101 may move the screen 610 in the display 110. For example, based on the visual object 130 dragged to a first edge 420-1 along a first path 621, the electronic device 101 may enter another state (e.g., a state 701 of FIG. 7A) for moving the screen 610 to another display different from the display 110. For example, based on the visual object 130 dragged to a third edge 420-3 along a third path 623, the electronic device 101 may enter a state (e.g., a state 602 of FIG. 6B) for adjusting a display of the screen 610. For example, based on the visual object 130 dragged toward the third edge 420-3, in case that a portion of the screen 610 exceeding a preset ratio (e.g., 50%) is moved outside the third edge 420-3 in the screen 610 displayed in association with the visual object 130, the electronic device 101 may switch from the state 601 of FIG. 6A to the state 602 of FIG. 6B.

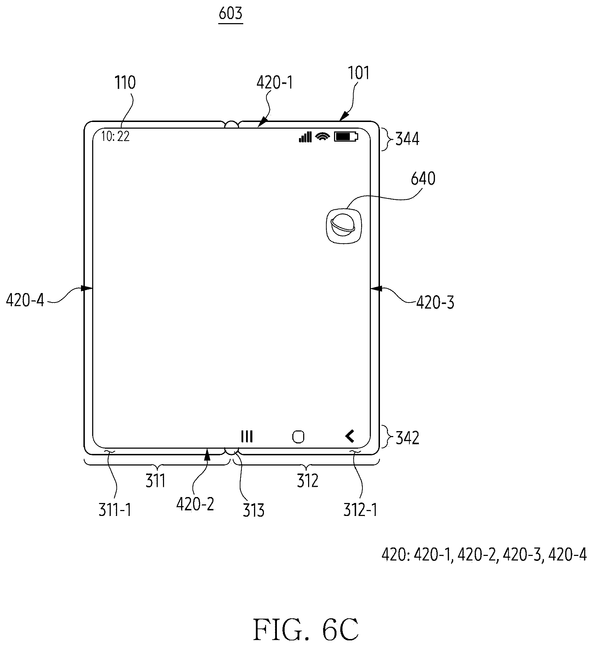

Referring to FIG. 6B, in the state 602, the electronic device 101 according to an embodiment may guide a change of a layout of the screen 610 based on a visual object 630. The electronic device 101 may display the visual object 630 in a portion of the third edge 420-3 adjacent to the visual object 130 dragged along the third path 623. For example, the visual object 630 may be displayed in association with the third edge 420-3. The visual object 630 may have a rectangular shape filled with a color of a preset transparency. The electronic device 101 may change the layout of the screen 410 to a layout corresponding to the visual object 630, based on identifying that the visual object 630 dragged along the third path 623 is released in the visual object 630. The electronic device 101 may switch from the state 602 of FIG. 6B to a state 603 of FIG. 6C, based on an input indicating release of the visual object 130 in the visual object 630.

Referring to FIG. 6C, in the state 603, the electronic device 101 according to an embodiment may display a visual object 640 including an icon representing an application corresponding to the screen 610 in a portion of the display 110 where the visual object 630 was displayed in the state 603 of FIG. 6C. In the state 603 in which the screen 610 of the application is replaced with the visual object 640 including the icon, the electronic device 101 may at least temporarily cease to display the screen 610 in the display 110. As the display of the screen 610 ceases, a state of the application corresponding to the screen 610 may be switched from a foreground state to a background state. For example, as the electronic device 101 is switched from the state 602 of FIG. 6B to the state 603 of FIG. 6C, the electronic device 101 may at least temporarily cease to execute the application corresponding to the screen 610.

In the state 603 of FIG. 6C, in response to an input indicating selection of the visual object 640, the electronic device 101 may restore the screen 610 displayed in the state 602 before displaying the visual object 640. For example, the electronic device 101 may switch from the state 603 of FIG. 6C to the state 602 of FIG. 6B, based on a gesture of touching and/or clicking the visual object 640.

The electronic device 101 according to an embodiment may display the visual object 640 or the visual object 630 of FIG. 6C, based on whether switching from the screen 610 to the visual object 640 is supported by execution of an application (e.g., the application 225 of FIG. 2) providing the screen 610. In the case that the switching from the screen 610 to the visual object 640 is supported by the application, the electronic device 101 may display the visual object 630 of FIG. 6C, or switch to the state 603 for displaying the visual object 640 based on an input associated with the visual object 630. In the case that the switching from the screen 610 to the visual object 640 is not supported by the application, the electronic device 101 may refrain from displaying the visual object 630 of FIG. 6C, or display a message (e.g., "This app does not support automatic change of a pop-up icon.", such as the visual object 520 of FIG. 5B) indicating that switching to the visual object 640 is impossible.

As described above, the electronic device 101 according to an embodiment may change a size and/or a layout of a screen (e.g., the screens 410, and 610) based on the drag of the visual object 130. For example, the electronic device 101 may gradually reduce the size of the screen based on the visual object 130 dragged to an edge (e.g., the third edge 420-3). The electronic device 101 according to an embodiment may switch the screen corresponding to the visual object 130 between distinct displays, based on the visual object 130 dragged to another edge different from the edge. Hereinafter, an example of an operation in which the electronic device 101 according to an embodiment moves the screen corresponding to the visual object 130 between a plurality of displays will be described with reference to FIGS. 7A to 7C.

FIGS. 7A to 7D illustrate an example of an operation in which an electronic device 101 according to an embodiment transmits a screen 410 of an application executed by the electronic device 101 to an external electronic device 140-2 connected to the electronic device 101. The electronic device 101 of FIGS. 7A to 7B may be an example of the electronic device 101 of FIGS. 1 to 4. For example, the electronic device 101 and the display 110 of FIG. 2 may include the electronic device 101 and a display 110 of FIGS. 7A to 7B. A state 701 of FIG. 7A, which is a state after the state 401 of FIG. 4, may include a state of the electronic device 101 identifying a visual object 130 dragged to a first edge 420-1 along a first path 431.

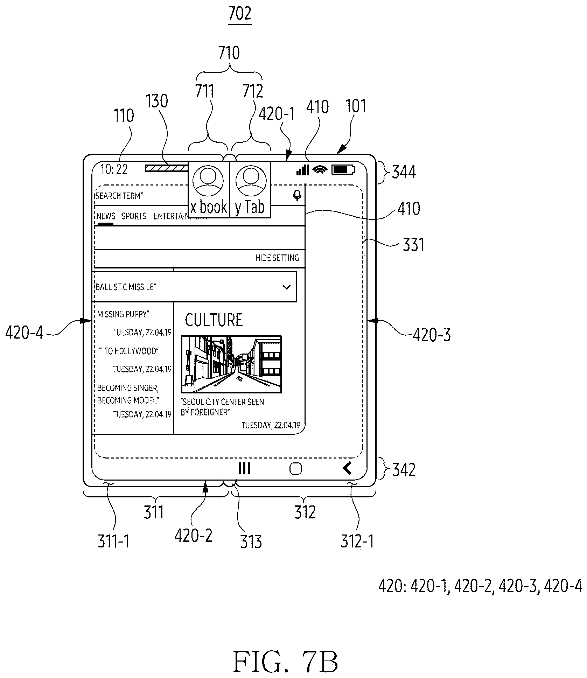

Referring to the state 701 of FIG. 7A, based on a move of the visual object 130 dragged to a preset area including the first edge 420-1 along the first path 431, the electronic device 101 may identify whether to display a visual object (e.g., a visual object 710 of FIG. 7B) for receiving an input indicating a move of a screen 410 to another display of an external electronic device. For example, the electronic device 101 may enter a state (e.g., a state 702 of FIG. 7B) for moving the screen 410 to another display different from the display 110, based on an external object dragged on the display 110 along the first edge 420-1 being stopped exceeding a preset period (e.g., 3 seconds) in a point less than or equal to a preset distance from the first edge 402-1.

The electronic device 101 according to an embodiment may identify one or more external electronic devices different from the electronic device 101 by using communication circuitry (e.g., the communication circuitry 230 of FIG. 2). The electronic device 101 may identify whether the external electronic device includes a display using the communication circuitry. In the case that the external electronic device includes the display, the electronic device 101 may identify information (e.g., size, and/or resolution) associated with the display included in the external electronic device by using the communication circuitry. The electronic device 101 may identify one or more external electronic devices using the communication circuitry in the state 701 of FIG. 7A, or prior to the state 701.

Referring to FIG. 7B, an exemplary state 702 in which the electronic device 101 according to an embodiment is identified by the communication circuitry, and displays a list of external electronic devices including a display is illustrated. The electronic device 101 may visualize the list of the external electronic devices based on the visual object 710 adjacent to the first edge 420-1. The electronic device 101 may display the visual object 710 to receive an input indicating a move of the screen 410 to another display different from the display 110 on which the screen 410 is displayed. For example, the electronic device 101 may display a list with respect to one or more external electronic devices identified by the communication circuitry, based on the visual object 130 dragged along the first path 431 being moved to an edge area including the first edge 420-1 of the display 110.

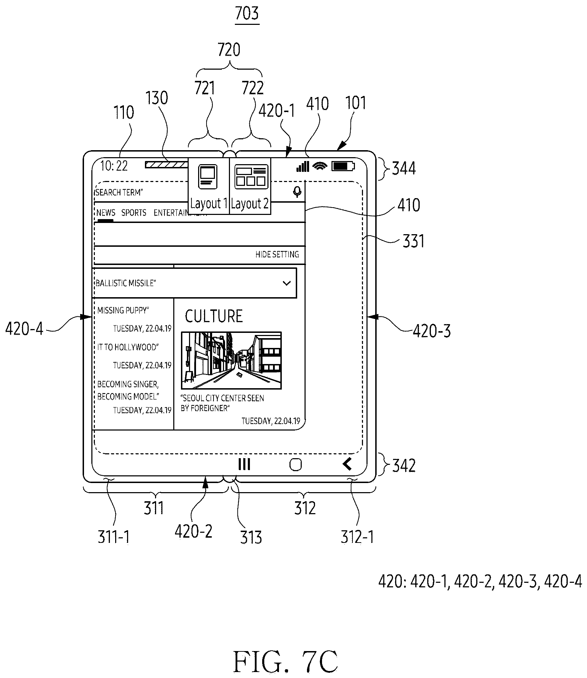

In the exemplary state 702 of FIG. 7B in which the electronic device 101 identifies two external electronic devices using the communication circuitry, the electronic device 101 may display visual objects 711 and 712 corresponding to each of the identified two external electronic devices in the visual object 710. Each of the visual objects 711 and 712 may include an identifier (e.g., name, and/or ID), an icon, and/or an image included in account information logged into a corresponding external electronic device. The electronic device 101 may identify an input indicating selection of any one of one or more external electronic devices, through a list visualized based on the visual object 710. In response to identifying the input based on the visual object 710, the electronic device 101 may switch from the state 702 of FIG. 7B to a state 703 of FIG. 7C.

Based on an input indicating selection of one external electronic device in the visual object 710, the electronic device 101 may enter the state 703 for setting a layout of a screen to be displayed through the external electronic device selected by the input. In the case that adjusting the layout of the screen is limited by the electronic device 101 and/or an application executed by the electronic device 101, the electronic device 101 may bypass the state 703 in response to the input received in the state 702. Based on bypassing the state 703, the electronic device 101 may transmit information for displaying the screen 410 displayed in the display 110 through the external electronic device selected by the input, to the external electronic device using the communication circuitry.

In the state 703, the electronic device 101 may display a list for distinct layouts of the displayable screen 410 through the external electronic device selected by the input received in the state 702. The electronic device 101 may identify the layouts with respect to the screen 410 based on execution of an application corresponding to the screen 410. The electronic device 101 may display the list for the layouts through a visual object 720. In the state 703 of FIG. 7C, the electronic device 101 may display the distinct layouts of the screen 410 based on visual objects 721 and 722 included in the visual object 720. Each of the visual objects 721 and 722 may include an image and/or an icon indicating a size of a corresponding layout. Referring to FIG. 7C, the visual object 721 may correspond to a layout associated with the screen 610 of FIG. 6A and/or the area 332 of FIG. 3. The visual object 722 may correspond to a layout associated with the screen 410 of FIG. 4 and/or the area 441 of FIG. 3. For example, the visual objects 721 and 722 may respectively include images indicating distinct arrangements of a plurality of visual objects included in the screen 410.

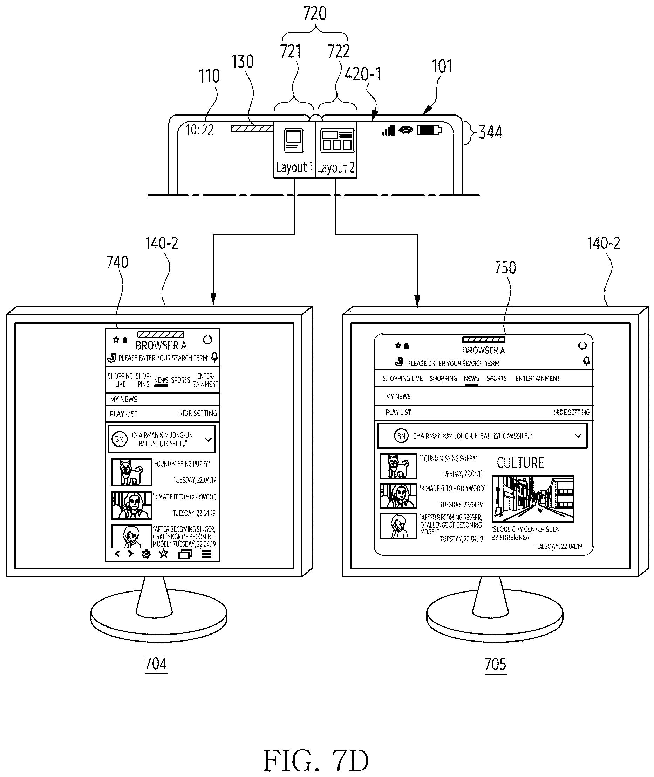

Referring to FIG. 7D, based on an input indicating selection of each of the visual objects 711 and 712 in the state 703 of FIG. 7C, exemplary states 704 and 705 in which the electronic device 101 displays information transmitted to an external electronic device 140-2, and screens 740 and 750 displayed through the external electronic device 140-2 based on the information are illustrated. The state 704 may include an exemplary state of the electronic device 101 switched by an input indicating selection of the visual object 721 in the state 703 of FIG. 7C. The state 705 may include an exemplary state of the electronic device 101 switched by an input indicating selection of the visual object 722 in the state 703 of FIG. 7C. The external electronic device 140-2 may be selected based on the visual object 710 in the state 702 of FIG. 7B.

Referring to FIG. 7D, based on a size corresponding to a layout selected by an input based on the visual object 720 among layouts having distinct sizes, the electronic device 101 may identify an arrangement of a plurality of visual objects included in a screen (e.g., the screen 410 of FIGS. 7A to 7C) of an application. The electronic device 101 may transmit information for displaying a screen (e.g., the screens 740 and 750) including a plurality of visual objects positioned based on the arrangement to the external electronic device 140-2.

For example, the screen 740 may be displayed based on information transmitted from the electronic device 101 to the external electronic device 140-2 by the input indicating the selection of the visual object 721. The external electronic device 140-2 receiving the information may display the screen 740 based on the information in a display of the external electronic device 140-2 different from the display 110. The screen 740 may have a layout corresponding to the visual object 721. An interaction between the external electronic device 140-2 and a user based on the screen 740 may be performed based on the electronic device 101 that transmits the information. For example, the electronic device 101 receiving the information indicating the interaction from the external electronic device 140-2 may change the screen 740 displayed through the external electronic device 140-2 by using the information transmitted to the external electronic device 140-2. For example, the electronic device 101 may transmit information for displaying the changed screen 740 based on the interaction to the external electronic device 140-2.

For example, the screen 750 may be displayed based on information transmitted from the electronic device 101 to the external electronic device 140-2 by the input indicating the selection of the visual object 722. The external electronic device 140-2 may display the screen 750 having a layout corresponding to the visual object 722 in the display included in the external electronic device 140-2 based on the information.

As described above, in response to an input with respect to the visual object 720, the electronic device 101 may transmit information for outputting a screen corresponding to a screen (e.g., the screen 410 of FIGS. 7A to 7C) of the application and having a layout selected by the input, through the external electronic device 140-2, to the external electronic device 140-2. The electronic device 101 may transmit information for displaying a screen (e.g., the screens 740 and 750) having a layout selected based on the visual object 720 to the external electronic device 140-2 selected based on the visual object 710.

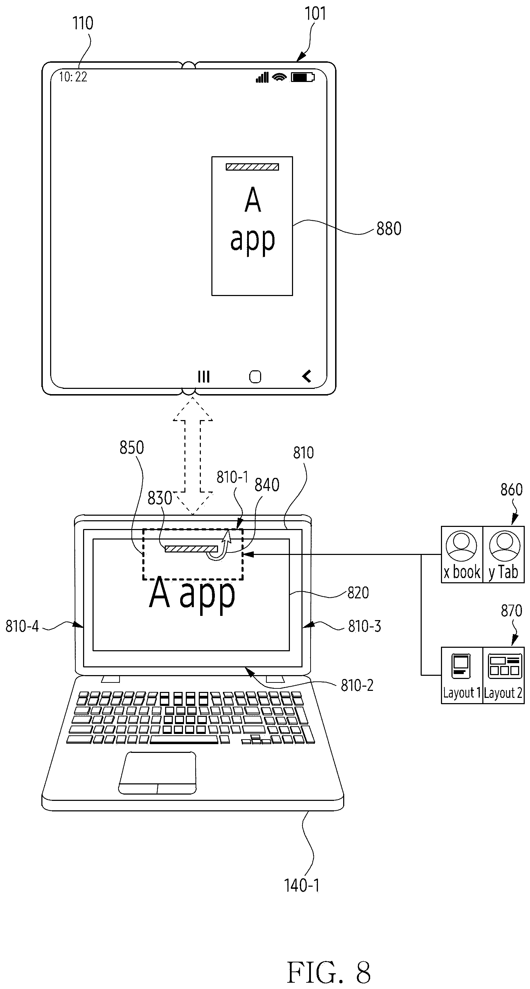

The electronic device 101 according to an embodiment may transmit the screen 410 displayed through the display 110 in the electronic device 101 to the external electronic device 140-2 different from the electronic device 101, based on at least one input received through the visual objects 710 and 720. An embodiment is not limited thereto, and the electronic device 101 may move a screen displayed through another display different from the display 110 to the display 110. Hereinafter, an example of an operation in which the electronic device 101 moves the screen displayed through the other display different from the display 110 to the display 110 will be described with reference to FIG. 8.

FIG. 8 illustrates an example of an operation in which an electronic device 101 performs based on a screen 820, which is displayed through an external electronic device 140-1 and corresponds to an application executed by the electronic device 101. The electronic device 101 of FIG. 8 may be an example of the electronic device 101 of FIGS. 1 to 4. For example, the electronic device 101 and the display 110 of FIG. 2 may include the electronic device 101 and a display 110 of FIG. 8.

Referring to FIG. 8, an exemplary state in which the electronic device 101 according to an embodiment is connected to the external electronic device 140-1 using communication circuitry (e.g., the communication circuitry 230 of FIG. 2) is illustrated. The electronic device 101 may obtain information associated with a display 810 of the external electronic device 140-1 in the state of being connected to the external electronic device 140-1. The information may include a size and/or resolution of the display 810. In the state, the electronic device 101 may transmit information for displaying the screen 820 of the application executed by a processor (e.g., the processor 210 of FIG. 2) of the electronic device 101 through the display 810 of the external electronic device 140-1. Referring to FIG. 8, the electronic device 101 may transmit the information for displaying the screen 820 having a layout associated with the size of the display 810 of the external electronic device 140-1 to the external electronic device 140-1. In a state of displaying the screen 820 in the display 810, in response to an input associated with the screen 820, the external electronic device 140-1 may transmit information indicating the input to the electronic device 101. Based on receiving the information indicating the input associated with the screen 820 from the external electronic device 140-1, the electronic device 101 may transmit information for changing the screen 820 displayed through the external electronic device 140-1 to the external electronic device 140-1.

In the state of FIG. 8 in which the screen 820 executed by the electronic device 101 is displayed through the external electronic device 140-1, the electronic device 101 according to an embodiment may display a visual object 830 for controlling a movement of the screen 820. Similar to the visual object 130 of FIG. 1, the visual object 830 of FIG. 8 may include a handle and/or a title bar with respect to the screen 820. Based on an input indicating dragging the visual object 830, the electronic device 101 may identify the visual object 830 that is moved to a first edge 810-1 of the display 810 by a path 840. In the exemplary state of FIG. 8 connected to the external electronic device 140-1 corresponding to a laptop, the input indicating dragging the visual object 830 may be received through hardware (e.g., a touch pad) included in the external electronic device 140-1. Based on information received from the external electronic device 140-1, the electronic device 101 may identify that the external object dragging the visual object 830 is stopped exceeding a preset period at a point spaced apart from the first edge 810-1 by less than a preset distance.

Based on identifying that the external object dragging the visual object 830 is stopped exceeding the preset period at the point spaced less than the preset distance from the first edge 810-1, the electronic device 101 may transmit information for displaying a visual object 860 for guiding the movement of the screen 820 to the external electronic device 140-1. The visual object 860 may include a list of one or more external electronic devices connected to the electronic device 101. The visual object 860 may be displayed through a portion 850 in the display 810 of the external electronic device 140-1 based on the information transmitted from the electronic device 101 to the external electronic device 140-1. Based on an input that is received through the display 810 of the external electronic device 140-1 and indicating selection of another electronic device different from the external electronic device 140-1 based on the visual object 860, the electronic device 101 may transmit information to display a visual object 870 for selecting a layout of a screen to be displayed through the electronic device selected by the input, to the external electronic device 140-1. The visual object 870 may include a list of layouts that is displayable, by an application that is executed by the electronic device 101 and corresponding to the screen 820. Based on an input indicating selection of a layout based on the visual object 870, the electronic device 101 may transmit information for displaying a screen having the selected layout to another electronic device selected through the visual object 860.

Referring to FIG. 8, in an exemplary state identifying an input indicating selection of the electronic device 101 based on the visual object 860, the electronic device 101 may display a screen 880 having a layout selected by the visual object 870 in the display 110. As the screen 880 is displayed in the display 110, the electronic device 101 may cease to display the screen 820 in the display 810 of the external electronic device 140-1.

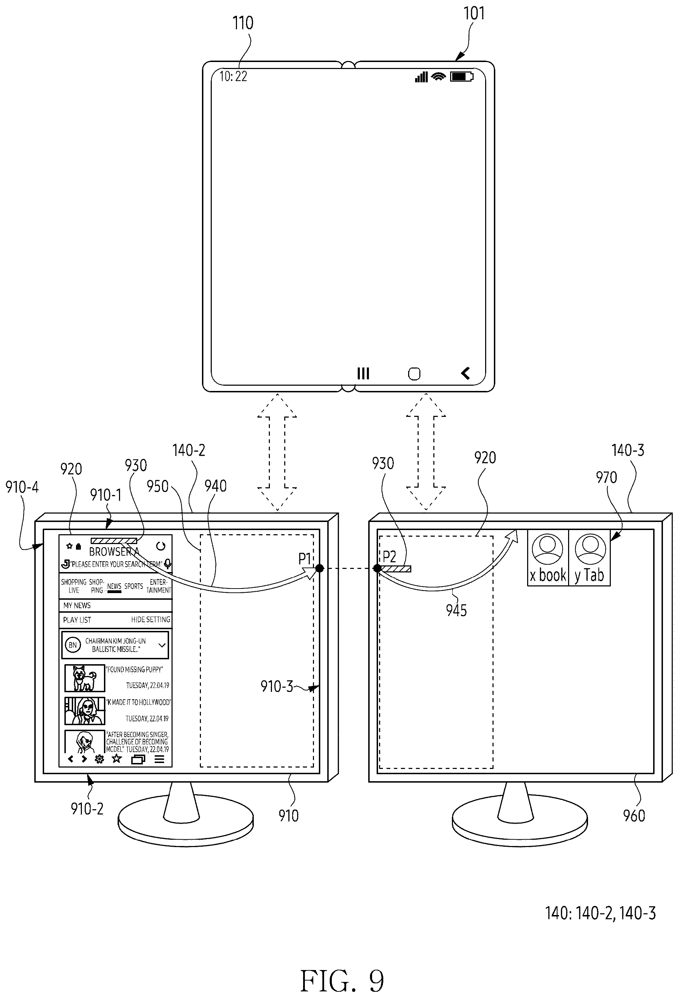

Although an embodiment in which the electronic device 101 is connected to the single external electronic device 140-1 has been described, an embodiment is not limited thereto. Hereinafter, in a state that the electronic device 101 according to an embodiment is connected to a plurality of external electronic devices, an exemplary operation of switching an external electronic device to display a screen of an application executed by the electronic device 101 among the plurality of external electronic devices will be described with reference to FIG. 9.

FIG. 9 illustrates an example of an operation in which an electronic device 101 according to an embodiment displays a screen of an application executed by the electronic device 101 using external electronic devices 140-2 and 140-3. The electronic device 101 of FIG. 9 may be an example of the electronic device 101 of FIGS. 1 to 4. For example, the electronic device 101 and the display 110 of FIG. 2 may include the electronic device 101 and a display 110 of FIG. 9.

Referring to FIG. 9, an exemplary state in which the electronic device 101 according to an embodiment is connected to a plurality of external electronic devices 140-2 and 140-3 using communication circuitry (e.g., the communication circuitry 230 of FIG. 2) is illustrated. The electronic device 101 may transmit information for displaying the screen of the application executed by the electronic device 101 to any one of the external electronic devices 140-2 and 140-3, based on the operation described with reference to FIGS. 7A to 7D. Referring to FIG. 8, an exemplary state in which the external electronic device 140-2 that has received the information displays a screen 920 of the application executed by the electronic device 101 in a display 910 of the external electronic device 140-2 is illustrated. Through the display 910 of the external electronic device 140-1, the electronic device 101 may display a visual object 930 for moving the screen 920 in the display 910, together with the screen 920. The visual object 930 of FIG. 9 may be an example of the visual object 130 of FIG. 1.

Referring to FIG. 9, the electronic device 101 may identify an input indicating dragging the visual object 930 in the display 910 of the external electronic device 140-2. The input may include a touch gesture performed on the display 110 of the electronic device 101 and/or a pointing device (e.g., a mouse) connected to the electronic device 101. Based on a path 940 indicated by the input, the electronic device 101 may move the visual object 930 and the screen 920 in the display 910.

Referring to FIG. 9, an exemplary case in which the electronic device 101 moves the visual object 930 and the screen 920 to a third edge 910-3 among a first edge 910-1 to a fourth edge 920-4 of the display 910 along the path 940 is illustrated. Based on identifying the visual object 930 dragged toward the third edge 910-3 extended from an end of the first edge 910-1, which is an upper end of the display 910, the electronic device 101 may identify a ratio of extent of distinct portions of the screen 920 divided by the third edge 910-3. In a state of identifying that a portion of the screen 920 exceeding a preset ratio (e.g., 50%) is moved to the outside of the third edge 910-2, the electronic device 101 may display a visual object 950 for changing a layout of the screen 920 in the display 910 of the external electronic device 140-2.

The visual object 950 of FIG. 9 may be an example of the visual object 510 of FIG. 5A. The electronic device 101 may identify whether the layout of the screen 920 may be adjustable based on an application corresponding to the screen 920. Based on the input indicating dragging the visual object 930, the electronic device 101 may display whether the layout of the screen 920 is adjustable based on a color and/or a shape of a border line of the screen 920. In the case that a change of the layout of the screen 920 by the application is not supported, the electronic device 101 may refrain from displaying the visual object 950 or display a visual object (e.g., the visual object 520 of FIG. 5B) for guiding that the layout of the screen 920 may not be changed, similar to the state 502 of FIG. 5B. In the case that the change of the layout of the screen 920 is supported, the electronic device 101 may display the visual object 950 in the display 910, based on an external object stopped by exceeding a preset period on a point P1 on the third edge 910-3. The electronic device 101 identifying that the visual object 930 is released in the visual object 950 may change a position, a size, and/or the layout of the screen 920 in the display 910. For example, the electronic device 101 may display a screen of the application corresponding to the screen 920, based on a portion of the display 910 corresponding to the visual object 950.

Referring to FIG. 9, the electronic device 101 may support seamless movement of the screen 920 between the external electronic devices 140-2 and 140-3. For example, based on an input indicating a move of the visual object 930 by exceeding the point P1 on the third edge 910-3, the electronic device 101 may display the visual object 930 and the screen 920 in a display 960 of the external electronic device 140-3 different from the external electronic device 140-2. For example, the electronic device 101 may transmit information for displaying the visual object 930 and the screen 920 to the external electronic device 140-3 among the external electronic devices 140-2 and 140-3 based on the input. Referring to FIG. 9, the electronic device 101 may transmit information for displaying the visual object 930 on a point P2 corresponding to the point P1 in the display 960 of the external electronic device 140-3 to the external electronic device 140-3.

Referring to FIG. 9, based on an input indicating dragging the visual object 930 in the display 960 of the external electronic device 140-3, the electronic device 101 may move the visual object 930 and the screen 920 in the display 960. Referring to FIG. 9, based on identifying that the visual object 930 is dragged to a first edge 960-1 of the display 960 along a path 945, the electronic device 101 may transmit information for displaying a visual object 970 including a list of one or more external electronic devices connected to the electronic device 101 through the display 960 to the external electronic device 140-2. Based on an input received through the visual object 970, the electronic device 101 may move the screen 920 displayed in the display 960 to another electronic device different from the external electronic device 140-3. As described above with reference to FIG. 7C, the electronic device 101 may display a visual object (e.g., the visual object 720 of FIG. 7C) for changing the layout of the screen 920 to be displayed through the other electronic device in a state of moving the screen 920 to the other electronic device.

Hereinafter, an operation of the electronic device 101 according to an embodiment will be described with reference to FIGS. 10 to 11.

FIG. 10 illustrates an example of a flowchart for describing an operation of an electronic device according to an embodiment. The electronic device of FIG. 10 may be an example of the electronic device 101 of FIGS. 1 to 9. Operations of FIG. 10 may be performed by the electronic device 101 and/or the processor 210 of FIG. 2.

Referring to FIG. 10, in operation 1010, the electronic device according to an embodiment may display a first screen corresponding to an application executed by the electronic device in a first display together with a visual object for moving the first screen. The first display may include the display 110 of FIGS. 1 to 9. The application may include the application 225 of FIG. 2. The application being executed by the electronic device may mean that a plurality of instructions indicating the application are used for control of a processor (e.g., the processor 210 of FIG. 2) of the electronic device. A state of the electronic device associated with the operation 1010 of FIG. 10 may include the state described above with reference to FIGS. 1, 4, 5A to 5B, 6A to 6B, 7A to 7D, 8 and/or 9.

Referring to FIG. 10, in operation 1020, the electronic device according to an embodiment may move the first screen in the first display based on a first input dragging a visual object. The first input may be performed by an external object contacted on the first display of the operation 1010. The first input may be performed by another electronic device (e.g., a mouse) connected to the electronic device. Based on a path dragged by the first input, the electronic device may move the first screen along the path.

Referring to FIG. 10, in operation 1030, the electronic device according to an embodiment may identify whether the visual object has been moved into a preset area including an edge of the first display by the first input. For example, the electronic device may identify whether the visual object of the operation 1010, dragged by the first input, has been moved into the preset area. The edge of the operation 1030 may include the first edge 420-1 of FIG. 7A. Before the visual object is moved into the preset area (1030-NO), the electronic device may maintain moving the first screen along the path indicated by the first input in the first display based on the operation 1020.

Referring to FIG. 10, in operation 1040, the electronic device according to an embodiment may display a first list with respect to one or more external electronic devices connected to the electronic device. Before performing the operation 1040, the electronic device may identify one or more external electronic devices different from the electronic device using communication circuitry. The electronic device may display the first list in the display.

Referring to FIG. 10, in operation 1050, the electronic device according to an embodiment may determine whether a second input indicating selection of one external electronic device through the first list has been received. The second input may be included in the first list of the operation 1040 and indicate selection of any one of visual objects (e.g., the visual objects 711 and 712 of FIG. 7B) corresponding to distinct external electronic devices connected to the electronic device. Before receiving the second input (1050-NO), the electronic device may maintain displaying the first list based on the operation 1040.

In a state of receiving the second input (1050-YES), in operation 1060, the electronic device according to an embodiment may display a second list with respect to distinct layouts of the first screen displayable through a second display of an external electronic device selected by the second input. The electronic device may obtain the second list with respect to the layouts based on the application of the operation 1010. The electronic device may display the second list based on visual objects (e.g., the visual objects 721 and 722 of FIG. 7C) corresponding to each of the layouts included in the second list. In operation 1070, the electronic device according to an embodiment may determine whether a third input selecting any one of the layouts in the second list has been received. Before receiving the third input (1070-NO), the electronic device may maintain displaying the second list.

In a state of receiving the third input for selecting a layout (1070-YES), in operation 1080, the electronic device according to an embodiment may transmit information for outputting the second screen having a layout selected by the third input of the operation 1070 and corresponding to the first screen, through the second display, to the external electronic device selected by the second input. The exemplary states of FIGS. 8 to 9 may include a state after the electronic device performs the operation 1080.

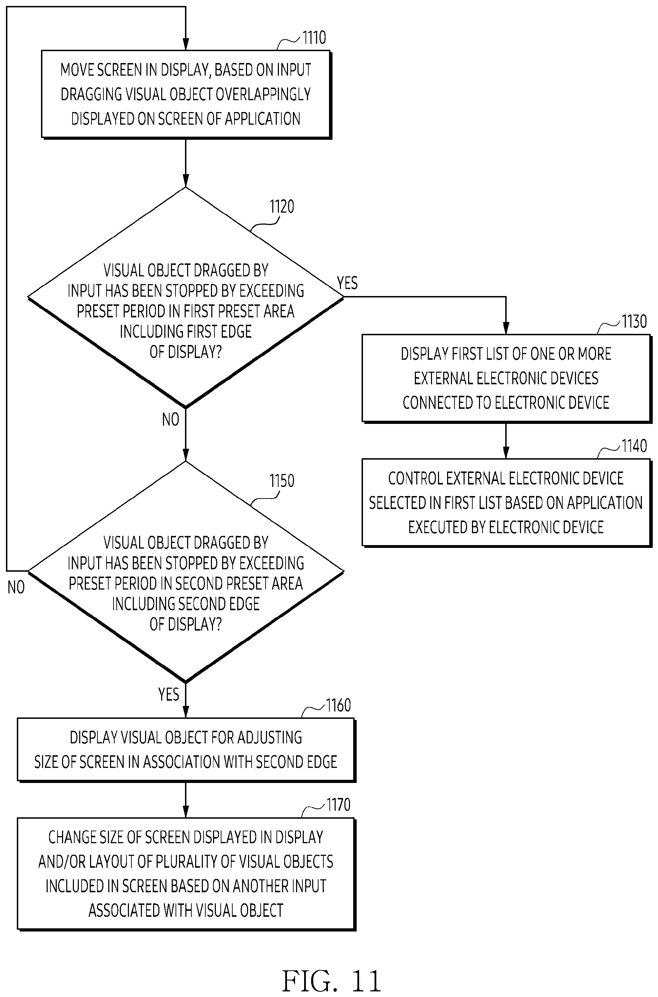

FIG. 11 illustrates an example of a flowchart for describing an operation of an electronic device according to an embodiment. The electronic device of FIG. 11 may be an example of the electronic device 101 of FIGS. 1 to 9. Operations of FIG. 11 may be performed by the electronic device 101 and/or the processor 210 of FIG. 2. At least one of the operations of FIG. 11 may correspond to the operations of FIG. 3 and/or FIG. 10.

Referring to FIG. 11, in operation 1110, the electronic device according to an embodiment may move a screen in a display, based on an input dragging a visual object overlappingly displayed on the screen of an application. The visual object, like the visual object 130 of FIG. 1, may have a form of a handle for controlling movement of the screen.

Referring to FIG. 11, in operation 1120, the electronic device according to an embodiment may determine whether the visual object dragged by the input has been stopped by exceeding a preset period (e.g., 3 seconds) in a first preset area including a first edge (e.g., the first edge 420-1 of FIG. 4) of the display. In a state of identifying the visual object stopped by exceeding the preset period (1120-YES), the electronic device may display a first list for one or more external electronic devices connected to the electronic device based on operation 1130. The first list displayed by the electronic device based on the operation 1130 may have the same shape as the visual object 710 of FIG. 7B. In operation 1140, the electronic device according to an embodiment may control an external electronic device selected in the first list based on an application executed by the electronic device. For example, the electronic device may transmit information for displaying a screen corresponding to the application to the external electronic device. In a state of displaying the screen corresponding to the application based on the information, the external electronic device may transmit information indicating an input identified based on the screen to the electronic device. Based on the input identified based on the information, the electronic device may transmit information for changing the screen of the application to the external electronic device.

In a state of identifying the visual object stopped less than or equal to the preset period in the first preset area (1120-NO), based on operation 1150, the electronic device according to an embodiment may determine whether the visual object dragged by the input has been stopped by exceeding the preset period in a second preset area including a second edge (e.g., the third edge 420-3 and/or the fourth edge 420-4 of FIG. 4) of the display. In the case that the visual object is stopped for less than the preset period in the second preset area (1150-NO), the electronic device may move the screen in the display based on the operation 1110.

In a state of identifying that the visual object is stopped by exceeding the preset period in the second preset area (1150-YES), in operation 1160, the electronic device according to an embodiment may display a visual object for adjusting a size of the screen in association with the second edge. The visual object of the operation 1160 may include the visual object 510 of FIG. 5A. In operation 1170, the electronic device according to an embodiment may change the size of the screen displayed in the display and/or a layout of a plurality of visual objects included in the screen based on another input associated with the visual object. While switching from the state 501 of FIG. 5A to the state 601 of FIG. 6A, the electronic device may perform the operation 1160 of FIG. 11.

As described above, based on a visual object displayed together with a screen corresponding to an application, the electronic device according to an embodiment may receive an input indicating selection of a layout of the screen and/or the display on which the screen is to be displayed. Based on a position and/or a direction in which the visual object is dragged, the electronic device may display a list of layouts of the screen, or display a list of displays on which the screen will be displayed. The layouts may correspond to distinct sizes of a screen displayable by the electronic device.

A method for displaying a layout of a screen of an application executed by an electronic device and/or a UI for changing a display on which the screen is to be displayed may be required. As described above, an electronic device (e.g., the electronic device 101 of FIG. 1 to FIG. 9) according to an embodiment may comprise memory (e.g., the memory 220 of FIG. 2) storing instructions, communication circuitry (e.g., the communication circuitry 230 of FIG. 2), a display (e.g., the display 110 of FIG. 2), and a processor (e.g., the processor 210 of FIG. 2). The instructions may be configured to, when executed by the processor, cause the electronic device to display a first screen of an application (e.g., the application 225 of FIG. 2), and a visual object for moving the first screen, in the display. The instructions may be configured to, when executed by the processor, cause the electronic device to display the first screen moved in the display based on a first input dragging the visual object (e.g., the visual object 130 of FIG. 1). The instructions may be configured to, when executed by the processor, cause the electronic device to display, based on the visual object dragged by the first input being moved into an edge area of the display, a first list with respect to one or more external electronic devices identified by the communication circuitry. The instructions may be configured to, when executed by the processor, cause the electronic device to display, in response to a second input that is received through the first list, and is indicating a selection of a first external electronic device, a second list with respect to distinct layouts of the first screen that is displayable through the first external electronic device. The instructions may be configured to, when executed by the processor, cause the electronic device to transmit, to the first external electronic device in response to a third input with respect to the second list, information for outputting a second screen having a layout in the second list selected by the third input and corresponding to the first screen, through the first external electronic device.

For example, the instructions may be configured to, when executed by the processor, cause the electronic device to identify an arrangement a plurality of visual objects included in the first screen, based on a size corresponding to the layout selected by the third input among the layouts having distinct sizes. The instructions may be configured to, when executed by the processor, cause the electronic device to transmit, to the first external electronic device, the information to display the second screen including the plurality of visual objects which are positioned based on the arrangement.

For example, the instructions may be configured to, when executed by the processor, cause the electronic device to display whether a size of the first screen is adjustable based on a color of a border line of the first screen, in response to the first input.

For example, the instructions may be configured to, when executed by the processor, cause the electronic device to display the first list in the display, based on identifying that a gesture indicating the first input is maintained in the edge area during a preset period.

For example, the instructions may be configured to, when executed by the processor, cause the electronic device to display the first list based on images included in account information respectively corresponding to the plurality of external electronic devices.

For example, the instructions may be configured to, when executed by the processor, cause the electronic device to display the second list based on images indicating sizes respectively corresponding to the layouts.

For example, the instructions may be configured to, when executed by the processor, cause the electronic device to display, based on identifying that the first screen is moved to a second edge connected to an end of a first edge included in the edge area based on the visual object dragged by the first input, another visual object for changing the size of the first screen to a size of a preset area associated with the second edge, based on the size of the first screen distinguished by the second edge.

For example, the instructions may be configured to, when executed by the processor, cause the electronic device to display the first screen, together with the visual object, based on the size of the preset area in response to a fourth input indicating a selection of the another visual object. The instructions may be configured to, when executed by the processor, cause the electronic device to display other visual object to guide replacement of the first screen into an icon representing the application, in response to a fifth input indicating a move of the visual object displayed together with the first screen displayed based on the size of the preset area.

For example, the instructions may be configured to, when executed by the processor, cause the electronic device to display the other visual object in association with the second edge, based on identifying that a visual object being moved by the fifth input and the first screen are moved toward the second edge.

For example, the instructions may be configured to, when executed by the processor, cause the electronic device to, in response to an input indicating a selection of the other visual object, at least temporarily cease to display the first screen in the display, and display the icon at a portion of the display where the other visual object were displayed.

As described above, a method of an electronic device may comprise displaying a first screen of an application and a first visual object for moving the first screen in a display of the electronic device. The method may comprise displaying, based on a first input dragging the first visual object, the first screen moved in the display. The method may comprise displaying, based on the first visual object dragged by the first input being moved into a first preset area including a first edge of the display, a second visual object for receiving a second input indicating a move of the first screen to another screen of an external electronic device. The method may comprise displaying, based on the first visual object dragged by the first input being moved into a second preset area including a second edge of the display different from the first edge, a third visual object for changing a layout of the first screen displayed in the display.

For example, the displaying the second visual object may comprise displaying the second visual object including images respectively representing the plurality of external electronic devices identified by communication circuitry of the electronic device.

For example, the displaying the second visual object may comprise transmitting information to display the first screen corresponding to the application executed by a processor of the electronic device, to an external electronic device corresponding to an image selected by the second input among the images.

For example, the displaying the second visual object may comprise displaying, within the second visual object, images indicating distinct arrangements of a plurality of visual objects in the first screen to be displayed through the another display.

For example, the displaying the third visual object may comprise displaying the third visual object having a shape of a preset area formed along the second edge connected to an end of the first edge. The displaying the third visual object may comprise changing the layout of the first screen by changing, based on the preset area, an arrangement of a plurality of visual objects in the first screen displayed in the display, in response to a third input indicating a selection of the third visual object.

As described above, a method of an electronic device may comprise displaying a first screen of an application, and a visual object for moving the first screen, in a display of the electronic device. The method may comprise displaying the first screen moved in the display based on a first input dragging the visual object. The method may comprise displaying, based on the visual object dragged by the first input being moved into an edge area of the display, a first list with respect to one or more external electronic devices identified by communication circuitry of the electronic device. The method may comprise displaying, in response to a second input that is received through the first list, and is indicating selection of a first external electronic device, a second list with respect to distinct layouts of the first screen that is displayable through the first external electronic device. The method may comprise transmitting, to the first external electronic device in response to a third input with respect to the second list, information for outputting a second screen having a layout in the second list selected by the third input and corresponding to the first screen, through the first external electronic device.

For example, the transmitting may comprise identifying an arrangement a plurality of visual objects included in the first screen based on a size corresponding to the layout selected by the third input among the layouts having distinct sizes. The transmitting may comprise transmitting, to the first external electronic device, the information to display the second screen including the plurality of visual objects which are positioned based on the arrangement.

For example, the displaying the moved first screen may comprise displaying whether a size of the first screen is adjustable based on a color of a border line of the first screen, in response to the first input.

For example, the displaying the first list may comprise displaying the first list in the display based on identifying that a gesture indicating the first input is maintained in the edge area during a preset period.

For example, the displaying the first list may comprise displaying the first list based on images included in account information respectively corresponding to the plurality of external electronic devices.

For example, the displaying the second list may comprise displaying the second list based on images indicating sizes respectively corresponding to the layouts.

For example, the method may comprise displaying, based on identifying that the first screen is moved to a second edge connected to an end of a first edge included in the edge area based on the visual object dragged by the first input, another visual object for changing the size of the first screen to a size of a preset area associated with the second edge, based on the size of the first screen distinguished by the second edge.

For example, the method may comprise displaying the first screen, together with the visual object, based on the size of the preset area in response to a fourth input indicating a selection of the another visual object. The method may comprise displaying other visual object to guide replacement of the first screen into an icon representing the application, in response to a fifth input indicating a movement of the visual object displayed together with the first screen displayed based on the size of the preset area.

As described above, an electronic device (e.g., the electronic device 101 of FIG. 1 to FIG. 9) according to an embodiment may comprise memory (e.g., the memory 220 of FIG. 2) storing instructions, communication circuitry (e.g., the communication circuitry 230 of FIG. 2), a display (e.g., the display 110 of FIG. 2), and a processor (e.g., the processor 210 of FIG. 2). The instructions may be configured to, when executed by the processor, cause the electronic device to display a first screen of an application (e.g., the application 225 of FIG. 2) and a first visual object for moving the first screen in the display. The instructions may be configured to, when executed by the processor, cause the electronic device to display, based on a first input dragging the first visual object, the first screen moved in the display. The instructions may be configured to, when executed by the processor, cause the electronic device to display, based on the first visual object dragged by the first input being moved into a first preset area including a first edge of the display, a second visual object for receiving a second input indicating a move of the first screen to another screen of an external electronic device. The instructions may be configured to, when executed by the processor, cause the electronic device to display, based on the first visual object dragged by the first input being moved into a second preset area including a second edge of the display different from the first edge, a third visual object for changing a layout of the first screen displayed in the display.

For example, the instructions may be configured to, when executed by the processor, cause the electronic device to display the second visual object including images respectively representing the plurality of external electronic devices identified by the communication circuitry.

For example, the instructions may be configured to, when executed by the processor, cause the electronic device to transmit information to display the first screen corresponding to the application executed by the processor, to an external electronic device corresponding to an image selected by the second input among the images.

For example, the instructions may be configured to, when executed by the processor, cause the electronic device to display, within the second visual object, images indicating distinct arrangements of a plurality of visual objects in the first screen to be displayed through the another display.

For example, the instructions may be configured to, when executed by the processor, cause the electronic device to display the third visual object having a shape of a preset area formed along the second edge connected to an end of the first edge. The instructions may be configured to, when executed by the processor, cause the electronic device to change the layout of the first screen by changing, based on the preset area, an arrangement of a plurality of visual objects in the first screen displayed in the display, in response to a third input indicating selection of the third visual object.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device, comprising:
memory storing instructions;
communication circuitry;
a display; and
a processor, and wherein the instructions, when executed by the processor, cause the electronic device to:
display a first screen of an application, and a visual object for moving the first screen, in the display;
display the first screen moved in the display based on a first input dragging the visual object,
display, based on the visual object dragged by the first input being moved into an edge area of the display, a first list with respect to one or more external electronic devices identified by the communication circuitry;
display, in response to a second input that is received through the first list, and is indicating a selection of a first external electronic device, a second list with respect to distinct layouts of the first screen that is displayable through the first external electronic device; and
transmit, to the first external electronic device in response to a third input with respect to the second list, information for outputting a second screen having a layout in the second list selected by the third input and corresponding to the first screen, through the first external electronic device.

2. The electronic device of claim 1, wherein the instructions, when executed by the processor, cause the electronic device to:
identify an arrangement a plurality of visual objects included in the first screen based on a size corresponding to the layout selected by the third input among the layouts having distinct sizes;
transmit, to the first external electronic device, the information to display the second screen including the plurality of visual objects which are positioned based on the arrangement.

3. The electronic device of any one of claim 1 to claim 2, wherein the instructions, when executed by the processor, cause the electronic device to:
display whether a size of the first screen is adjustable based on a color of a border line of the first screen, in response to the first input.

4. The electronic device of any one of claim 1 to claim 3, wherein the instructions, when executed by the processor, cause the electronic device to:
display the first list in the display based on identifying that a gesture indicating the first input is maintained in the edge area during a preset period.

5. The electronic device of any one of claim 1 to claim 4, wherein the instructions, when executed by the processor, cause the electronic device to:
display the first list based on images included in account information respectively corresponding to the plurality of external electronic devices.

6. The electronic device of any one of claim 1 to claim 5, wherein the instructions, when executed by the processor, cause the electronic device to:
display the second list based on images indicating sizes respectively corresponding to the layouts.

7. The electronic device of any one of claim 1 to claim 6, wherein the instructions, when executed by the processor, cause the electronic device to:
display, based on identifying that the first screen is moved to a second edge connected to an end of a first edge included in the edge area based on the visual object dragged by the first input, another visual object for changing the size of the first screen to a size of a preset area associated with the second edge, based on the size of the first screen distinguished by the second edge.

8. The electronic device of any one of claim 1 to claim 7, wherein the instructions, when executed by the processor, cause the electronic device to:
display the first screen, together with the visual object, based on the size of the preset area in response to a fourth input indicating a selection of the another visual object;
display other visual object to guide replacement of the first screen into an icon representing the application, in response to a fifth input indicating a movement of the visual object displayed together with the first screen displayed based on the size of the preset area.

9. The electronic device of any one of claim 1 to claim 8, wherein the instructions, when executed by the processor, cause the electronic device to:
display the other visual object in association with the second edge, based on identifying that a visual object being moved by the fifth input and the first screen are moved toward the second edge.

10. The electronic device of any one of claim 1 to claim 9, wherein the instructions, when executed by the processor, cause the electronic device to:
in response to an input indicating a selection of the other visual object, at least temporarily cease to display the first screen in the display, and display the icon at a portion of the display where the other visual object were displayed.

11. A method of an electronic device, comprising:
displaying a first screen of an application and a first visual object for moving the first screen in a display of the electronic device;
displaying, based on a first input dragging the first visual object, the first screen moved in the display;
displaying, based on the first visual object dragged by the first input being moved into a first preset area including a first edge of the display, a second visual object for receiving a second input indicating a move of the first screen to another screen of an external electronic device; and
displaying, based on the first visual object dragged by the first input being moved into a second preset area including a second edge of the display different from the first edge, a third visual object for changing a layout of the first screen displayed in the display.

12. The method of claim 11, wherein the displaying the second visual object comprising,
displaying the second visual object including images respectively representing the plurality of external electronic devices identified by communication circuitry of the electronic device.

13. The method of any one of claim 11 to claim 12, wherein the displaying the second visual object comprising,
transmitting information to display the first screen corresponding to the application executed by a processor of the electronic device, to an external electronic device corresponding to an image selected by the second input among the images.

14. The method of any one of claim 11 to claim 13, wherein the displaying the second visual object comprising,
displaying, within the second visual object, images indicating distinct arrangements of a plurality of visual objects in the first screen to be displayed through the another display.

15. The method of any one of claim 11 to claim 14, wherein the displaying the third visual object comprising:
displaying the third visual object having a shape of a preset area formed along the second edge connected to an end of the first edge; and
changing the layout of the first screen by changing, based on the preset area, an arrangement of a plurality of visual objects in the first screen displayed in the display, in response to a third input indicating a selection of the third visual object.
